(19) Europäisches Patentamt
European Patent Office
Office européen des brevets

(11) **EP 2 051 137 A1**

(12) **EUROPEAN PATENT APPLICATION**

(43) Date of publication:
**22.04.2009 Bulletin 2009/17**

(51) Int Cl.:
***G02F 1/39*** (2006.01)     ***H01S 3/108*** (2006.01)

(21) Application number: **07118555.7**

(22) Date of filing: **16.10.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **Stichting voor Fundamenteel Onderzoek der Materie**<br>**3527 JP  Utrecht (NL)** | (72) Inventors:<br>• **Nienhuys, Han-Kwang**<br>  **3531 TE Utrecht (NL)**<br>• **Bakker, Huib Johan**<br>  **1901 XR Castricum (NL)**<br><br>(74) Representative: **van Looijengoed, Ferry Antoin Theodorus et al**<br>**De Vries & Metman**<br>**Overschiestraat 180**<br>**1062 XK  Amsterdam (NL)** |

(54) **Laser system and method for generating and amplifying optical pulses with a tunable output wavelength between approximately 0.75 and 2.5 μm**

(57)     A laser system for generating and amplifying optical pulses with a tunable output wavelength in the near-infrared between approximately 0.75 and 2.5 μm comprises an optical parametric amplifier having a nonlinear crystal (4), an optical seed source (2) for supplying an optical seed pulse to the nonlinear crystal (4) and an optical pump source (3) for supplying an optical pump pulse to the nonlinear crystal (4). The optical seed source (2) is adapted for supplying a wavelength in a range between approximately 0.75 and 2.5 μm, and the optical pump source (3) is adapted for supplying a wavelength in a range between approximately 0.65 and 1 μm. The nonlinear crystal (4) is biaxial and can be a KTP crystal. A relatively efficient and robust mirror arrangement for such a system is also disclosed, as well as methods for generating and amplifying optical pulses with a tunable output wavelength.

FIG. 1

**EP 2 051 137 A1**

**Description**

FIELD OF THE INVENTION

The invention relates to a laser system, more specifically a non-collinear optical parametric amplifier (NOPA) device and to a method for generating and amplifying optical pulses with a tunable output wavelength.

BACKGROUND OF THE INVENTION

In certain types of spectroscopic scientific measurements, there is a need for light sources that emit light of various wavelengths with short to ultrashort pulse durations, e.g. below 20 picosecond (ps) and with peak powers up to several gigawatts. Such pulses are also desired for applications in other fields, such as biomedicine and micromachining. Lasers that emit such pulses with a wavelength around 800 nanometer (nm) have become commonplace, as are so-called optical parametric amplifier (OPA) devices that can convert these optical pulses into pulses with different wavelengths which may be suitable for various applications. OPAs usually operate with around 10 per cent efficiency. Unfortunately, in the near-infared wavelength range, approximately 0.7-1.5 micrometer ($\mu$m), in particular in the range of approximately 0.9-1.5 $\mu$m, the available methods for pulse generation have disadvantages.

The light that goes into an OPA is commonly designated with the term 'pump pulses'. OPAs are widely used as a light source in scientific research, often with pump pulses originating from an amplified titanium:sapphire (Ti:sapphire) laser system, delivering pulses around 800 nm with typical pulse durations around 100 femtoseconds (fs) and a pulse energy on the order of 1 milliJoule (mJ), although OPAs which are pumped at 1064 nm with picosecond pulse durations have been designed as well.

The central part of an OPA is a crystal with nonlinear optical properties, hereafter simply referred to as a nonlinear crystal. The generated output pulses are in the same direction as the pump pulses. The output of an OPA always contains two wavelengths, called 'signal' and 'idler', that have wavelengths $\lambda_s$ and $\lambda_i$, respectively, such that $1/\lambda_s, + 1/\lambda_i = 1/\lambda_p$, where $\lambda_p$ is the pump wavelength. The signal is defined as the shortest of the two generated wavelengths. An OPA is seeded with an optical pulse, that serves as a seed for either signal or idler pulse. The seed pulse is amplified, and an accompanying idler pulse (if the seed serves as the signal pulse) or an accompanying signal pulse (if the seed serves as the idler pulse) is generated.

In the design of an OPA, a compromise has to be made between a high output pulse energy and a short pulse duration. The reason is that the large spectral bandwidth of the signal pulse required for a short pulse can only be achieved with a relatively thin crystal, i.e. a crystal that is relatively short in the direction of propagation of the laser pulse (s). In such a thin crystal, the generated output pulse energy is lower. When practical systems which are subject to such compromises are pumped with a 100 fs pulse, the signal pulses are similar in length to the pump pulses. In femtosecond OPAs, the nonlinear crystal commonly used is $\beta$-barium borate (BBO).

Moreover, output wavelengths below about 1180 nm are not directly available from a BBO-based OPA when pumped at 800 nm, although the output wavelength of an OPA can be converted into that range at the cost of a much lower pulse energy and added complexity. Pumping a BBO-based OPA at 400 nm allows direct access to these wavelengths, but also then the conversion of the initial 800 nm pulse to the 400 nm pump pulse involves significant losses and adds complexity to the system.

In a non-collinear OPA (NOPA), the bandwidth of the output pulses may be increased by introducing a small angle between the pump pulses and the seed/signal pulses as they pass through the BBO crystal. The mechanism behind this effect has been described extensively in the literature, for example by Riedle et al. (E. Riedle, M. Beutter, S. Lochbrunner, J. Piel, S. Schenkl, S. Sporlein, and W. Zinth. Generation of 10 to 50 fs pulses tunable through all of the visible and the NIR. Appl. Phys. B-Lasers Opt., 71(3):457-465, 2000). However, this method cannot be applied arbitrarily; the beneficial NOPA effect only occurs for particular combinations of wavelengths and crystal properties, such that the combined effects of dispersion and birefringence happen to be just right within distinct boundaries. For example, in BBO, there is only an increase in bandwidth when pumped at short wavelengths, such as 400 nm. The NOPA principle does not work in BBO when pumped at 800 nm. Moreover, the bandwidth advantage of a NOPA only applies to the signal pulses, which have a wavelength less than twice the pump wavelength, which again rules out short high-energy pulses in the difficult wavelength range between 800 and 1180 nm.

Simultaneously with the signal pulses, idler pulses are generated with a wavelength that is more than twice the pump wavelength (in the example above: more than 800 nm). These pulses typically have a strong spatial chirp, rather than being collimated, which renders them much less useful for applications. It is possible to design a NOPA such that the idler pulses are collimated, as discussed in the above-cited publication of Riedle et al., but this nullifies the bandwidth advantage of the NOPA configuration.

A recent paper by Zhang (W.Q. Zhang, "Optimum operation of femtosecond parametric oscillation of a non-collinear phase match in KTP", Appl.Opt. 44, 2431-2437 (2005)) discussed calculations on the use of potassium titanyl

phosphate (KTiOPO$_4$; KTP) crystals in an optical parametric oscillator (OPO) pumped at a wavelength between 395 and 600 nm. An OPO differs from an OPA in that both the pump pulses and the output signal pulses have a much lower energy, on the order of 10 nanoJoule (nJ) rather than 1 mJ, which imposes design constraints that are very different from those for an OPA. An important difference is that all optical pulses are focused to very small diameters in the crystal, which means that the volume in the crystal where the crossing beams overlap is rather small, which negatively affects the efficiency of the device. The calculations showed that a well-chosen noncollinear angle can improve the conversion efficiency of the OPO. However, the physical mechanism behind the improvement is fundamentally different from that in a NOPA: in the discussed OPO design, the difference in directions of the group velocity and phase velocity is used to increase the region of spatial overlap, while in a NOPA, the noncollinearity is chosen to better match the magnitudes of the group velocities.

Sub-femtosecond (sub-fs) pulses with a tunable wavelength are further discussed in T. Wilhelm, J. Piel, and E. Riedle, "Sub-20-fs pulses tunable across the visible from a blue-pumped single-pass noncollinear parametric converter", Opt. Lett., 22(19):1494-1496, 1997 and in G. M. Gale, M. Cavallari, T. J. Driscoll, and F. Hache, "Sub-20-fs tunable pulses in the visible from an 82-mhz optical parametric oscillator", Opt. Lett., 20(14):1562-1564, 1995.

Further, Kraemer et al. (D. Kraemer, R. Hua, M. L. Cowan, K. Franjic, and R. J. D. Miller, "Ultrafast noncollinear optical parametric chirped pulse amplification in KTiOAsO4," Opt. Lett. 31, 981-983 (2006)) discussed noncollinear parametric chirped pulse amplification of 1.56 $\mu$m pulses using potassium titanyl arsenate (KTiOAsO$_4$; KTA), wherein 100 fs pulses of an erbium fiber laser were stretched to 100 ps and synchronously pumped by high-power 100 ps pulses from a Nd:YLF regenerative amplifier at 1.05 $\mu$m. In a subsequent paper by Kraemer et al. (D. Kraemer, M. L. Cowan, R. Hua, K. Franjic, and R. J. Dwayne Miller, "High-power femtosecond infrared laser source based on noncollinear optical parametric chirped pulse amplification," J. Opt. Soc. Am. B 24, 813-818 (2007)), it was shown that such pulses could in several stages be further amplified and compressed to 130 fs, 1.56 $\mu$m laser pulses with a final energy of 500 $\mu$J and with sufficient bandwidth for 70 fs transform limited pulses.

In addition, WO 2006/072183 discloses a highly compact tuneable laser system that is capable of generating mid-infrared pulses with sub-nanosecond pulse durations and pulse energies greater than 10 $\mu$J. The pulse generation is based on three wave mixing in one or more bulk nonlinear crystals acting as an optical parametric amplifier (OPA). The OPA is pumped at a wavelength between 1.0 and 1.1 $\mu$m by a pulsed laser with a pulse duration of 1 to 1000 ps. When seeded with wavelengths between 1 and 2 $\mu$m, the OPA is capable of generating idler pulses of 2 to 15 $\mu$m.

SUMMARY

From the above, it follows that there remains a desire for a laser system that can generate broadband pulses with a tunable wavelength in the near-infrared wavelength range 0.75-2.5 $\mu$m.

A relatively efficient system is suitably provided by the present laser system for generating and amplifying optical pulses with a tunable output wavelength between approximately 0.75 and 2.5 $\mu$m. The laser system comprises an optical parametric amplifier having a nonlinear crystal, a first optical source, or seed source, for supplying a first optical pulse, or seed pulse, to the nonlinear crystal and a second optical source, or pump source, for supplying a second optical pulse, or pump pulse, to the nonlinear crystal. The first optical source is adapted for supplying a wavelength in a range between approximately 0.75 and 2.5 $\mu$m, and the second optical source is adapted for supplying a wavelength in a range between approximately 0.65 and 1 $\mu$m. The pulse length may be shorter than approximately 1 ns. The nonlinear crystal is biaxial.

Such system allows relatively efficient generation of wavelengths in the range 0.75-2.5 $\mu$m, in particular in the shorter range such as below 1.4 $\mu$m even with a single pass amplification step. The output signal wavelength is tunable, dependent on the wavelengths of the pump and/or seed pulses. Further tunability may be provided by adapting the phase-matching angle, which is the angle between the crystal z-axis and the propagation direction of the pump or signal pulse. This is done conveniently by rotating the nonlinear crystal.

The system maybe provided as a noncollinear OPA arrangement, as defined in claim 2. The NOPA-arrangement may allow for a wider amplification bandwidth, thus increasing the wavelength range of possible output pulses, also allowing shorter pulses.

The output pulse energy may be increased by providing the system as a double-pass or multi-pass system, as defined in claim 5.

In another aspect an elegant and robust laser system for generating and amplifying optical pulses with a tunable output wavelength is provided, comprising an optical parametric amplifier having a nonlinear crystal, a first optical source, or seed source, for supplying a first optical pulse, or seed pulse, to the nonlinear crystal and a second optical source, or pump source for supplying a second optical pulse, or pump pulse to the nonlinear crystal. The system further comprises a first and a second mirror. The first mirror and the nonlinear crystal are positioned in the first and second focal points of an elliptical trajectory, respectively. The second mirror is movable along the elliptical trajectory. The first mirror is arranged for directing the first or second pulse to the second mirror, and the second mirror is arranged for directing that pulse to the nonlinear crystal.

Such a system allows to alter the angle of incidence of the pump or seed pulse, respectively, in the nonlinear crystal while maintaining the optical path length of the pulse and thus its timing with respect to another pulse.

Such system may be provided with further mirrors to provide a double or multi-pass system, as defined in claim 9.

In accordance with the above, the present disclosure provides a method for generating and amplifying optical pulses with an output wavelength that is tunable (hereinafter referred to as a "tunable output wavelength") between approximately 0.75 and 2.5 $\mu$m, comprising the steps of generating a first optical pulse, or seed pulse, with a wavelength in a range between approximately 0.75 and 2.5 $\mu$m and optically seeding an optical parametric amplifier having a biaxial nonlinear crystal with the first optical pulse. Further, generating a second optical pulse, or pump pulse, with a wavelength in a range between approximately 0.65 and 1 $\mu$m, and with a pulse length shorter than approximately 1 ns and optically pumping the optical parametric amplifier with the second optical pulse. The method further comprises substantially overlapping the generated first and second optical pulses in the nonlinear crystal spatially and temporally.

The method may be extended with compressing the output pulses to a pulse length shorter than 1 ps, e.g. 100 fs or less. In addition, at least the first optical pulse may be sent through the nonlinear crystal at least twice for further amplifying the second pulse.

It thus surprisingly turns out that an OPA, in particular a noncollinear OPA, may be relatively efficiently operated for the generation and more particularly amplification of pulses with a tunable output wavelength between approximately 0.75 and 2.5 $\mu$m when pumped with a pump wavelength in a range between approximately 0.65 and 1 $\mu$m and seeded with a wavelength in a range between approximately 0.75 and 2.5 $\mu$m. At the same time, the system produces idler pulses with wavelengths in the range of approximately 1.6 to 5 $\mu$m, which also can be used for practical purposes. The pump wavelength is directly accessible with several known lasers, the most important being a Ti:sapphire laser. Due to the relatively wide tunability of the Ti:sapphire laser, the output spectrum of the present laser system being pumped with a Ti:sapphire laser is particularly easily tunable. Further tunability is achieved by adapting the angle of incidence of the seed and pump pulses onto the crystal.

Further, a method is provided, comprising the steps of providing an optical parametric amplifier, including arranging a first mirror, a nonlinear crystal and a second mirror such that the first mirror and the nonlinear crystal are positioned at the first focal point and the second focal point of an elliptical trajectory, respectively, and that the second mirror is arranged on that elliptical trajectory, generating a first optical pulse, optically seeding the optical parametric amplifier with the first optical pulse, generating a second optical pulse, optically pumping the optical parametric amplifier with the second optical pulse, substantially overlapping the generated first and second pulses in the nonlinear crystal spatially and temporally, wherein the first or second pulse is directed with the first mirror to the second mirror and with the second mirror to the nonlinear crystal.

In this way, a noncollinear OPA may be operated relatively efficiently, and be adapted for different noncollinear angles substantially without requiring readjustment of the timing between operative pulses.

The method may be adapted for multi-pass use.

BRIEF DESCRIPTION OF THE DRAWINGS

Fig. 1 shows a schematic overview of the disclosed laser system.

Fig. 2 shows how the optical beams with pump and seed pulses are oriented and polarized relative to the nonlinear crystal and its crystallographic axes.

Fig. 3 shows the phase-mismatch for collinear versus non-collinear parametric amplification of 1120 nm light, when pumped at 800 nm.

Fig. 4 shows measured values for the phase-matching angle $\theta$ and the noncollinear angle $\psi$ for a KTP crystal when pumped at 800 nm.

Fig. 5 shows the calculated phase-matching angle $\theta$ and the noncollinear angle $\psi$ for a KTP crystal when pumped at 1064 nm.

Fig. 6 shows a possible double-pass configuration, where the signal beam passes twice through the same nonlinear crystal.

Fig. 7 shows a typical implementation of a prism compressor with the purpose of reducing the pulse duration.

Fig. 8 shows a double-pass, elliptical mirror configuration where the time-overlap between the seed and pump pulses is preserved as the noncollinear angle $\psi$ is varied.

DETAILED DESCRIPTION OF EMBODIMENTS

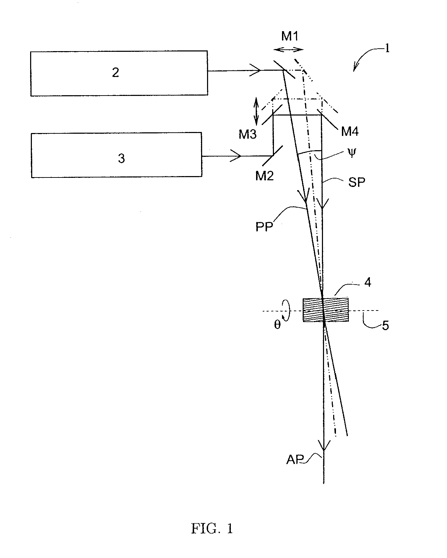

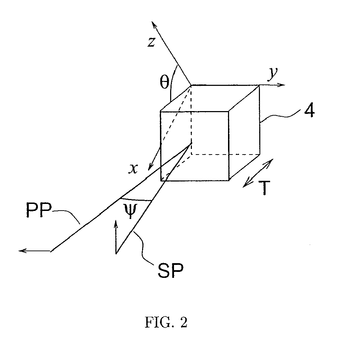

Fig. 1 shows a schematic top view of an embodiment of a laser system 1 comprising an optical pump source 2, an optical seed source 3, a nonlinear crystal 4 and a number of mirrors M1-M4 for directing the beam of the pump pulses PP and that of the seed pulses SP from the pump and seed sources 2 and 3, respectively. The beam of the amplified pulse is indicated with AP. The generated idler is not indicated. The optical pump pulse and seed pulse propagate at a non-zero angle ψ to each other through the crystal 4. Fig. 2 shows a schematic close-up view of the nonlinear crystal 4 with a thickness T in the general propagation direction of the pump pulse and/or seed pulses. In Fig. 2, the crystal axes x,y,z are indicated. The crystal is rotatable about an axis of rotation 5 for varying the phase-matching angle of θ, i.e. the angle between the direction of propagation of the pump or seed pulse with respect to the crystal z-axis, as indicated in Fig. 2 and explained in more detail below. Such rotation allows to vary the output wavelength. The polarizations of the pump pulse and seed pulse are indicated with arrows on the beam path.

The pump source 3 provides optical pump pulses with a wavelength in the range between 0.65 and 1 μm, in the present example the wavelength is approximately 800 nm, with an adequate pulse duration and peak power. Typically, a suitable pump source is a commercially available titanium:sapphire amplifier that delivers pulses of 1 mJ with a pulse duration of 100 to 150 fs, yielding up to 10 GW of peak power. The seed source 2 provides seed pulses in a spectrum that can cover wavelengths in the range from 0.75 to 2.5 μm and a pulse duration on the order of 100 fs. The seed pulses may be broadband, covering a large bandwidth at once, e.g. the full mentioned wavelength range, and/or tunable, advantageously having a bandwidth of at least 50 nm for achieving femtosecond pulses. The seed pulse should be sufficiently intense; in a prototype a suitable peak spectral power of the seed pulse was on the order of 300 W/nm. Advantageously, the pump and seed beams have similar diameters for optimizing overlap and conversion efficiency. The diameters may be chosen as a compromise between a high conversion efficiency (small diameters), and good spatial overlap inside the nonlinear crystal, as discussed below. Of course, the intensity of the pulses should be not so high as to lead to optical damaging of the nonlinear crystal. In the prototype, the beam diameters were approximately 3 mm with 500 μJ of pump energy. Smaller pump energies could be accommodated for use with smaller beam diameters and/or thicker crystals.

The pump and seed sources 2 and 3 are synchronized, such that they emit pulses essentially simultaneously. With mirrors M1-M4 in Fig. 1, the beams are steered such that there is an angle ψ between the propagation direction of the beams PP and SP and that the pulses overlap both spatially and temporally in the nonlinear crystal 4. Nonlinear crystals which are suitable for use in a laser system operating with the present combination of wavelength ranges are birefringent uniaxial and biaxial crystals. Common uniaxial crystals are for example β-barium borate (BBO) and lithium niobate ($LiNbO_3$). Biaxial crystals are for example KTP (potassium titanyl phosphate), KTA (potassium titanyl arsenate), Rubidium Titanyl Phosphate (RTP), Rubidium Titanyl Arsenate (RTA), lithium triborate ($LiB_3O_5$), Lithium Thioindate ($LiInS_2$) Lithium Selenoindate ($LiInSe_2$), Zinc-Germanium Diphosphide ($ZnGeP_2$), etc. In the prototype, the biaxial crystal KTP was used. The nonlinear crystal 4 is cut with the crystallographic x, y, and z axes at well-chosen angles to the surfaces, suiting the desired phase-matching angle. As shown in Fig. 2, the polarizations of the pump and seed beams are perpendicular to each other. The angle between the z axis of the nonlinear crystal 4 and the direction of propagation of the pump beam PP, here more particularly the plane spanned by the pump beam PP and seed beam SP, is the phase-matching angle θ. The crystal 4 is attached to a rotation stage (not shown), which allows the user to vary θ from about 40 to 70 deg. The nonlinear crystal 4 has a polished front and back surface. A suitable thickness T for use in a noncollinear geometry is between 1 and 25 mm. In the prototype 5 mm was used.

The mirrors in Fig. 1 are arranged such that the polarizations and crystal orientation are as depicted in Fig. 2. The pump polarization is approximately parallel to the crystal y axis and the signal polarization is in the crystals x-z plane, for Type II phase matching.

For any OPA or NOPA, the so-called phase-matching condition has to be satisfied, which means that the wavevectors of the pump, signal, and idler frequencies should essentially satisfy the so-called phase mismatch condition:

$$|k_p - k_s - k_i| = |\Delta k| < 1/L,$$

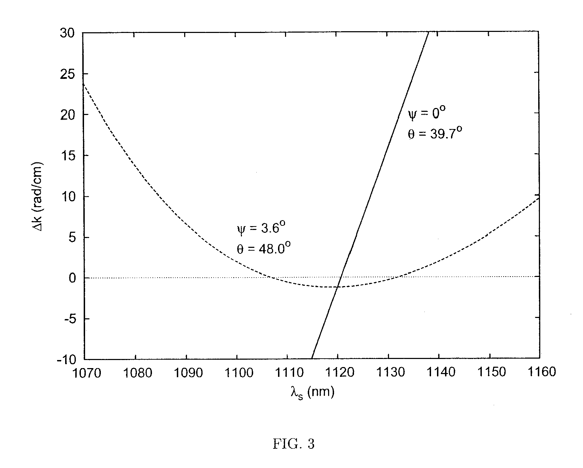

where Δk is the phase mismatch and L is the length of the crystal over which the pulses interact. The condition "<" is not strict: the phase mismatch may also be equal to or slightly larger than 1/L. In an optimum configuration L essentially equals the crystal thickness T. Fig. 3 shows the the phase mismatch Δk as obtained from numerical simulations, as a function of the signal wavelength $\lambda_s$ for a given pump wavelength of 800 nm in KTP as the nonlinear crystal. For a crystal with L = 1 cm, the phase mismatch may not exceed approximately 1 rad/cm. From this figure, is clear that for collinear operation (ψ = 0°) a small range of wavelengths around 1120 nm is properly phase-matched and can be suitably amplified for this combination.

One way to increase the bandwidth which can be amplified is to reduce the crystal thickness T, but this is at the cost of a lower conversion efficiency. Such behaviour is fairly typical for phase matching.

However, it has been found that the phase-mismatch curve is vastly different with a well-chosen non-collinear angle $\psi$ = 3.6° between the pump and signal beams, as is visible in Fig. 3. At this angle, it becomes apparent that a much larger bandwidth can be suitably amplified in a 800 nm pumped NOPA-configuration.

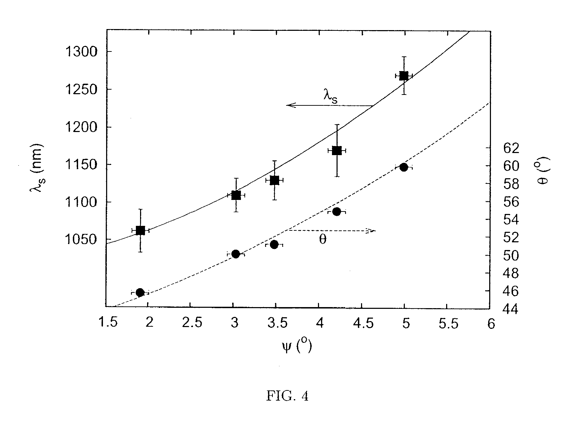

In Fig. 1, mirror M1 can be moved in order to define the angle $\psi$, while mirrors M3 and M4 can be moved together in order to accordingly match the path lengths for the seed pulses and the pump pulses such that both pulses overlap in the nonlinear crystal 4. Fig. 4 shows measured and calculated data of the optimal values for the phase-matching angle $\theta$ and the noncollinear angle $\psi$ for various signal wavelengths $\lambda_s$, when the NOPA crystal is pumped at 800 nm. The calculated curves are relatively sensitive to the exact dispersion relations of the crystal material; e.g. calculations from different published data for KTP will produce curves that can differ by as much as a few degrees within a range of approximately 1-7°. In practice, the optimal combination of values is best found empirically.

Note that $\theta$ and $\psi$ in the shown tuning curves are internal angles, i.e., angles inside the nonlinear crystal 4 with respect to the crystal axes x, y, z. Because of refraction, the external angles (in air, outside the crystal) are larger. E.g., the refractive index of KTP is around 1.78 for the relevant wavelengths, which means that the external angles are approximately a factor 1.78 larger than the internal angles.

A relevant parameter is the time overlap between the pump and seed pulses. For fs pulses a time overlap within about +/-50 fs is desirable, which corresponds to a pathlength difference of 15 $\mu$m, given the speed of light. For generation of such fs pulses the mirrors M3 and M4 may therefore be mounted on a translation stage with adequate precision.

With the prototype, an intensity gain of a factor 170 could be achieved in a 5 mm crystal 4 with well tuned angles $\theta$ and $\psi$. By contrast, a large deviation of $\psi$ from the optimum angle, e.g. an angle of 0° (collinear) instead of 3.5°, reduces the gain from 170 to 20 under otherwise unaltered conditions.

The description above relates to pump pulses with a wavelength of 800 nm, a pulse duration of 150 fs, and a pulse energy of 1 mJ. However, the device could also be designed for smaller or larger pulse energies (e.g. in the range from 1 $\mu$J to 10 mJ), by changing the beam diameters and/or crystal thicknesses.

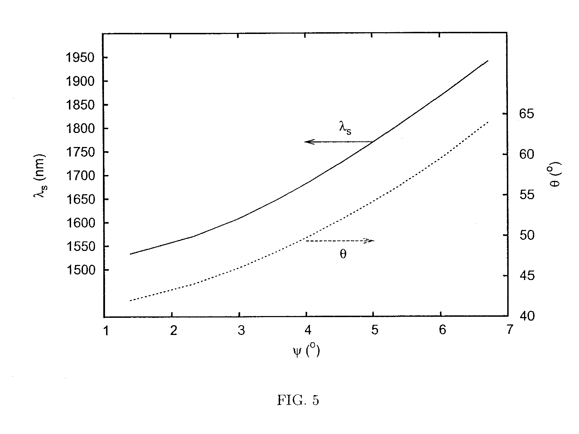

It should further be noted that instead of a pump pulse with a wavelength of 800 nm, an approx. 1064 nm pump pulse may be used with biaxial crystals of the KTP-family mentioned above. Pump sources are commercially available with 10 ps pulse duration at 1030-1064 nm. Using this pump wavelength would shift the tuning range of the signal pulse wavelength to the range of approximately 1500-2100 nm, provided that the seed source covers these wavelengths. Fig. 5 shows calculated noncollinear and phase-matching angles $\psi$ and $\theta$, respectively for pumping KTP at 1064 nm. Note that in practice, again, the actual optimal angles could deviate by up to approximately 1 degree because of inaccuracies in the tabulated refractive indices of the crystal materials. Further calculations have shown that a non-collinear geometry can lead to enhanced phase-matching in KTP for pump wavelengths from approximately 0.65 to 1.5 $\mu$m. At a pump wavelength of 650 nm, the tuning range spans less than 50 nm around a signal wavelength of 760 nm. Similarly, at a pump wavelength of 1450 nm the tuning range spans less than 50 nm around a signal wavelength of 2340 nm. However, at a pump wavelength of 700 nm the tuning range spans about 320 nm around a signal wavelength of 1010 nm, being in the range of about 850-1170 nm. At a pump wavelength of 1200 nm the tuning range spans about 540 nm around a signal wavelength of 2070 nm, being in the range of about 1800-2340 nm.

Seed pulses may be provided from any source emitting at the desired optical frequency within the amplification bandwidth of the nonlinear crystal used in the present system. For generating short pulses, a broadband seed is preferred, since the shortest possible pulse duration of a laser pulse is inversely proportional to its spectral bandwidth. A convenient source of broadband seed pulses is a white light continuum that is generated by focusing a small fraction (1 $\mu$J) of the pump light into a sapphire plate with a thickness between 1 and 5 mm. After passing through the sapphire plate, the light will emerge as a divergent cone of light with a broad spectrum covering essentially the whole range from 0.75 to 2.5 $\mu$m. With an additional lens, the divergent cone can be transformed into a collimated beam.

Instead of a sapphire plate, a commercially available 'photonic' optical fiber could be used, that transforms an ultrashort pulse into a broadband pulse.

Other sources of broadband seed light, such as mode-locked lasers are equally conceivable. Narrowband sources such as (quasi-) continuous (CW) lasers may also be used. Here, quasi-CW lasers should be understood to also comprise largely monochromatic systems such as Q-switched and cavity dumped lasers.

It should be noted that the crystallographic x and y axes of the nonlinear crystal 4 may be very similar, depending on the particular crystal used, and that therefore the present system also works if the crystal is oriented such that the x and y axes in Fig. 2 are swapped. Then, the exact angles $\theta$ and $\psi$ are slightly different. Further, Fig. 2 depicts the seed and pump beams oriented in a plane perpendicular to the x-z plane, but this is not critical. The system also works with the seed-pump plane parallel to the x-z plane or an orientation inbetween. Likewise, it is not critical whether it is the pump or the seed beam (or neither) that is perpendicular to the crystal y axis.

The thickness T of the nonlinear crystal 4 may be chosen as a compromise between a large spectral bandwidth (favoring thin crystals) and a large amplification of the seed (favoring thick crystals). In the prototype, a 5-mm-thick KTP crystal was used, with front and back faces of 6x6 mm. The front and back faces should be large enough for letting the seed and pump beams pass through without clipping, which may deteriorate the beam quality and may lead to damage to the crystal. Suitable crystal thicknesses for the present system are in the range from approximately 1 to 25 mm, depending on the compromise between spatial overlap between noncollinear beams (favoring thinner crystals), a high conversion efficiency (favoring thicker crystals), and a large bandwidth (favoring thinner crystals).

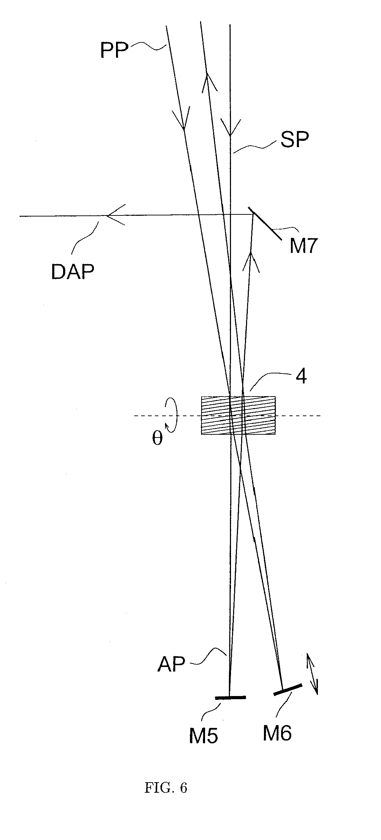

If the energy amplification factor from a single pass through the nonlinear crystal 4 is not sufficient for a particular use, the system could be arranged with a double-pass amplification. A convenient arrangement is illustrated in Fig. 6, showing the pump and seed beams PP and SP, respectively, and the nonlinear crystal 4. Fig. 6 shows a detail of the laser system, wherein the pump source 2, the seed sources 3 and mirrors M1-M4 are not shown. Compared to the embodiment of Fig. 1, mirrors M5-M7 are added. With the mirrors M5 and M6 the pump pulse PP and once amplified signal pulse AP are sent back through the crystal 4 at essentially the same noncollinear angle $\psi$ as during the first pass, generating a twice amplified signal pulse DAP. In the embodiment of Fig. 6 mirror M6 is mounted on a translation stage (not shown), which enables to adjust temporal overlap of the pump and singly amplified seed pulses during the second pass. Alternatively, mirror M5 could be mounted on a translation stage. For the second pass the pump beam and singly amplified beams are slightly displaced. This allows the separation of the doubly amplified pulses and the incoming seed pulses with an additional mirror M7. The depleted pump beam after both passes may be steered to a beam dump or to optical instruments, e.g. a power meter for measuring conversion efficiency and/or a photodiode for monitoring timing. Further uses may be envisioned. The generated idler pulse is not indicated, but may also suitably be used, e.g. for monitoring the operation of the present system or for optical uses per se.

The setup may be extended to provide multiple passes, for further amplifying the generated output pulse energy.

The embodiment of Fig. 6 is not equivalent to using a crystal with twice the thickness, since in addition to the amplified signal pulses, also idler pulses (with a longer wavelength than the signal pulses) are generated. As discussed earlier, the phase mismatch $\Delta k$ depends on the pump, signal, and idler wavelengths and restricts the bandwidth that can be amplified. If the idler pulse is discarded after a first pass, then the bandwidth restriction during the second pass is only dependent on the single crystal thickness rather than on twice the crystal thickness. This means that a higher bandwidth can be amplified. Moreover, it allows the spatial overlap between the pulses to be optimized for each pass individually.

In a multi-pass setup (not shown), it is also possible to use a different pump pulse, instead of reusing the depleted pump pulse. E.g. (not shown) the pump pulse may be split into two pulses by means of a beam splitter. This allows to optimize the pulse energy and beam diameter of the pump pulses separately for each pass, e.g. using mirrors, lenses and/or curved mirrors. This may require a higher total energy of the pump pulse to drive the NOPA system as a whole. The output energy of such a system may be higher than that of the shown embodiments.

In the shown embodiments of Figs. 1 and 6, optical path lengths are matched with the help of translation stages and mirrors, which enable adjustments of path lengths over several tens of mm with an accuracy better than 10 $\mu$m. However, in cost-sensitive applications, a small tuning of the optical path length, e.g. a few tenths of a mm, could be done by insertion into one beam path of a glass plate that is rotated around an axis perpendicular to the beam, thus changing the path length through the glass and thereby the time needed for the pulse to reach the nonlinear crystal 4.

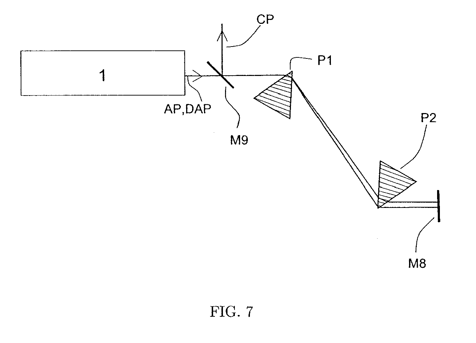

The output signal pulses of the present system may have a relatively large bandwidth, depending on factors such as the pump power, the seed bandwidth and the noncollinear angle $\psi$. However, this does not necessarily mean that the signal pulses have the shortest possible pulse duration, since that depends on the phase of the wavelength components. This phase is affected by the phase properties of the seed source and the dispersion in the optical components, such as the nonlinear crystal. As common in ultrashort-pulse applications, the phase, and thereby the pulse duration, can be corrected with a pulse compressor. A conventional pulse compressor 6 is depicted in Fig. 7. The pulse compressor 6 comprises two prisms P1, P2 and two mirrors M8 and M9, respectively. A pulsed beam, here the singly or doubly amplified beam AP or DAP, respectively of the laser system 1 passes through the first prism P1, which has a different angle of refraction for the different wavelength components. The essentially identical second prism P2, rotated over 180 deg relative to Prism 1, refracts the different wavelength components again. After prism P2, a mirror M8 reflects all rays back through the two prisms P1 and P2, although vertically (out of the plane of the drawing) displaced such that mirror M9 may separate the input pulses from the compressed pulses. Such a prism compressor may be incorporated in the laser system 1.

The arrangements of the mirrors shown in Figs. 1 and 6, respectively, are not the only possibilities. The purpose of the mirrors is to steer the optical pulses to the nonlinear crystal at predetermined angles and with time-overlap.

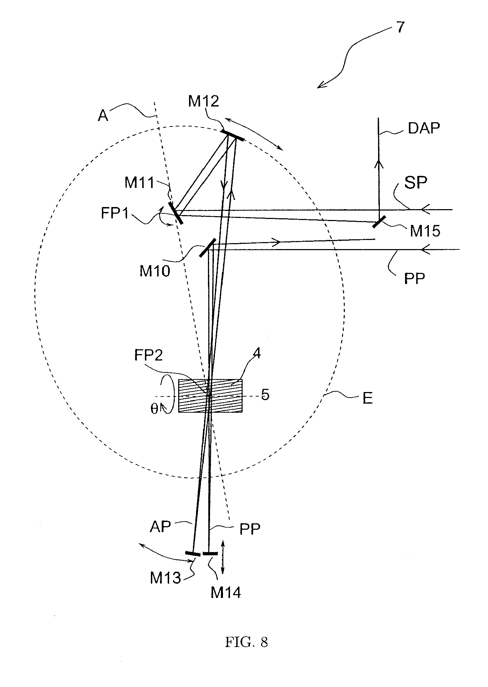

A particularly effective optical arrangement for a NOPA-configuration has been developed and is presented in Fig 8. Fig. 8 shows a laser system 7, similar to laser system 1. Elements which are substantially the same and serve substantially the same function are identified with the same reference numerals as in Figs 1-6. The laser system 7 comprises an optical pump source 2, an optical seed source 3, a nonlinear crystal 4, which is rotatable about an axis 5 for adjustment of the phase-matching angle $\theta$, and a number of mirrors M10-M15.

The mirror M11 and the nonlinear crystal 4 are placed at focal points FP1 and FP2 of an elliptical trajectory indicated with the dotted ellipse E. The mirror M12 is movable along the trajectory of the ellipse E. The mirror M13 is movable along a circular trajectory with focal point FP2 at its center.

The arrangement of mirrors in Fig. 8 allows for a variable noncollinear angle ψ while preserving the time overlap between a stationary and a variable beam path. The pump pulses PP are directed to the nonlinear crystal 4 with mirror M10. The seed pulses SP hit a mirror M11 that is pivotable around a vertical axis and which directs the beam to a mirror M12, which in turn directs the signal pulse SP to the nonlinear crystal 4 such that, at the crystal, the pump pulse PP and seed pulse SP are arranged with a suitable noncollinear angle ψ to each other and that the seed pulse may be amplified in the crystal 4.

The mathematical properties of an ellipse define that the path length from the first focal point FP1 to the second focal point FP2 via any single point on the ellipse E is constant. Consequently, the path length from M11 to the nonlinear crystal via M12 is independent of the position of M12 along the elliptic curve.

The amplified signal pulse reflects off mirror M13 and is sent back for a second pass through the nonlinear crystal 4 with a small angular offset to mirrors M12 and M10, after which it is reflected off mirror M15 for further use. The pump pulses PP are reflected for the second pass by mirror M14. Mirror 14 is arranged movable for adapting the beam path length, and thus the pulse round-trip travelling time to the crystal for timing the second pass of the pump pulse to that of the singly amplified pulse for proper amplification. With the combined movement of mirrors M11, M12, and M13, the doubly amplified signal pulses DAP may always hit the mirror M15 at the same position, angle, and time, which makes this configuration highly convenient since no further alignment and time-delay adjustment is necessary for the outcoming doubly amplified pulses DAP.

The design may be expanded with more mirrors which are movable along circular trajectories centered on focal points FP1 and FP2 for realising multi-pass setups. The mirrors for reflecting the pump pulse may then all be movable for adjusting the timing of the pulses.

The constructions for the movable mirrors M12 and M13 should be made such that the respective mirror surface for use is always essentially tangential to the elliptical curve E for M12 and to the circular curve centered on FP2 for M13, and that the laser beam hits each mirror at the tangential point on the mirror surface.

For fs pulses, the time overlap between the pump and seed pulses may have to be accurate within about 50 fs. In that case the allowed error in path length due to non-ideal alignment of the elliptical or circular construction is about 15 μm, meaning that the deviation of the mirror position in the direction of the beam that hits the mirror is approximately $d = 7.5$ μm. If the radius of curvature of the mirror trajectory is taken to be R, then the allowed lateral error is $(2Rh)^{1/2}$, which is about 2 mm for a radius $R = 200$ mm. Note that for longer pump pulses, e.g. several picoseconds rather than hundreds of femtoseconds, the allowable error in path length is much larger.

Obviously, the design may also be used with other amplification mechanisms than OPA, such as regular amplification in an amplifying medium and with (quasi) CW-lasers, for which temporal coincidence of pulses may be less of an issue.

It should further be noted that the beam paths indicated for the pump and seed pulses as illustrated may be inverted.

In accordance with the above, it will be seen that the present invention provides a laser system and a method for providing broadband infrared pulses in a wavelength range that is difficult to access with other ultrashort pulse devices. These broadband pulses may be further compressed into ultrashort pulses.

Although the description above contains many details, these should not be construed as limiting the scope of the disclosure but as merely providing illustrations of embodiments. For example, the pump pulses may be relatively broadband and may be in a wide range of pulse energies. Where such properties are undesirable or negatively influence the operation of the laser system these can be compensated for with appropriate other optical parameters, such as beam diameters, thickness of the nonlinear crystal and the number of passes through the nonlinear crystal. The source of the seed can either be provided externally, or be designed as a part of the embodiment.

It should be noted that, whereas the shown embodiment and the prototype is discussed with a focus on femtosecond-pulses, the present laser system and method are applicable for laser pulses up to a nanosecond. Possibly, the pulse length may be further extended when sufficiently strong laser sources become available, the principal limit being merely a threshold for damaging processes in the nonlinear crystal (fracture, bleaching, etc.).

## Claims

1. Laser system (1) for generating and amplifying optical pulses with a tunable output wavelength between approximately 0.75 and 2.5 μm, comprising

   an optical parametric amplifier having a nonlinear crystal (4),
   a first optical source (3) for supplying a first optical pulse to the nonlinear crystal (4)
   and a second optical source (2) for supplying a second optical pulse to the nonlinear crystal (4),

wherein the first optical source (3) is adapted for supplying a wavelength in a range between approximately 0.75 and 2.5 $\mu$m, and

wherein the second optical source (2) is adapted for supplying a wavelength in a range between approximately 0.65 and 1 $\mu$m, and

wherein the nonlinear crystal (4) is biaxial.

2. Laser system (1) according to claim 1, wherein the system (1) comprises at least one optical element (M1), arranged for causing the first and second optical pulses to propagate through the nonlinear crystal (4) at a non-zero angle ($\psi$) to each other, e.g. in a range between 1-6 degrees.

3. Laser system (1) according to claim 1 or 2,
wherein the first source (3) is adapted for supplying a first optical pulse with a spectral width of more than 10 nm, e.g. 50 nm or 100 nm.

4. Laser system according to any one of the claims 1-3, comprising means (P1,P2,M8) for compressing the generated output pulses to a pulse length shorter than 1 ps, e.g. 100 fs or less.

5. Laser system (1) according to any one of the claims 2-4, wherein the system (1) is arranged for a multi-pass configuration, comprising means (M5,M6) arranged for directing the second pulse and (amplified) first optical pulse at least twice through the nonlinear crystal for further amplifying the (amplified) first optical pulse.

6. Laser system (1) according to any one of the claims 2-5, further comprising a first mirror (M11) and a second mirror (M12) and
wherein the first mirror (M11) and the nonlinear crystal (4) are positioned in the first focal point (FP1) and second focal point (FP2) of an elliptical trajectory (E), respectively, and
wherein the second mirror (M12) is movable along the elliptical trajectory (E),

the first mirror being (M11) arranged for directing the first or second optical pulse to the second mirror (M12),
the second mirror (12) being arranged for directing that optical pulse to the nonlinear crystal (4).

7. Laser system (1) according to claim 6, provided with a third mirror (M13) and a fourth mirror (M14), wherein the third mirror (M13) is adapted to be movable along a circular trajectory which is centered on the second focal point (FP2) of the elliptical trajectory (E), the third and fourth mirrors (M13,M14) being arranged for directing the second optical pulse and (amplified) first optical pulse at least once again through the nonlinear crystal (4) for further amplifying the (amplified) first optical pulse.

8. Laser system (1) for generating and amplifying optical pulses with a tunable output wavelength, comprising

an optical parametric amplifier having a nonlinear crystal (4),
a first optical source (3) for supplying a first optical pulse to the nonlinear crystal (4)
and a second optical source (2) for supplying a second optical pulse to the nonlinear crystal (4), and
a first mirror (M11) and a second mirror (M12),
wherein the first mirror (M11) and the nonlinear crystal (4) are positioned in the first focal point (FP1) and second focal point (FP2) of an elliptical trajectory (E), respectively, and
wherein the second mirror (M12) is movable along the elliptical trajectory (E),
the first mirror (M11) being arranged for directing the first or second optical pulse to the second mirror (M12),
the second mirror (M12) being arranged for directing that optical pulse to the nonlinear crystal (4).

9. Laser system according to claim 8, provided with a third mirror (M13) and a fourth mirror (M14), wherein the third mirror (M13) is adapted to be movable along a circular trajectory which is centered on the second focal point (FP2) of the elliptical trajectory (E), the third and fourth mirrors (M13,M14) being arranged for directing the second optical pulse and (amplified) first optical pulse at least once again through the nonlinear crystal (4) for further amplifying the (amplified) first optical pulse.

10. Method for generating and amplifying optical pulses with a tunable output wavelength between approximately 0.75 and 2.5 $\mu$m, comprising the steps of

generating a first optical pulse with a wavelength in a range between approximately 0.75 and 2.5 $\mu$m,

optically seeding an optical parametric amplifier having a biaxial nonlinear crystal (4) with the second optical pulse
generating a second optical pulse, with a wavelength in a range between approximately 0.6 and 1 $\mu$m, and with a pulse length shorter than approximately 1 ns
optically pumping the optical parametric amplifier with the second optical pulse
substantially overlapping the generated first and second optical pulses in the nonlinear crystal (4) spatially and temporally.

11. Method according to claim 10, wherein the generated first and second optical pulses are arranged to propagate through the nonlinear crystal (4) at a non-zero angle ($\psi$) to each other, e.g. in a range between 1-6 degrees.

12. Method according to claim 10 or 11, wherein the first optical pulse has a wavelength with a spectral width of more than 10 nm, e.g. 50 nm or 100 nm.

13. Method according to any one of the claims 10-12,
wherein the output pulses are compressed to a pulse length shorter than 1 ps, e.g. 100 fs or less.

14. Method according to any one of the claims 10-13,
wherein at least the first optical pulse is sent through the nonlinear crystal (4) at least twice for further amplifying the first optical pulse.

15. Method for generating and amplifying optical pulses with a tunable output wavelength comprising the steps of

providing an optical parametric amplifier, including arranging a first mirror (M11), a nonlinear crystal (4) and a second mirror (M12) such that the first mirror (M11) and the nonlinear crystal (4) are positioned at the first focal point (FP1) and the second focal point (FP2) of an elliptical trajectory (E), respectively, and that the second mirror (M12) is arranged on that elliptical trajectory (E),
generating a first optical pulse, optically seeding the optical parametric amplifier with the first optical pulse,
generating a second optical pulse, optically pumping the optical parametric amplifier with the second optical pulse,
substantially overlapping the generated first and second pulses in the nonlinear crystal (4) spatially and temporally,
wherein the first or second pulse is directed with the first mirror (M11) to the second mirror (M12) and with the second mirror (M12) to the nonlinear crystal (4).

16. Method according to claim 15, wherein at least the first optical pulse is sent through the nonlinear crystal (4) at least twice for further amplifying the first optical pulse.

FIG. 1

FIG. 2

FIG. 3

FIG. 4

FIG. 5

FIG. 6

FIG. 7

FIG. 8

| | European Patent Office | EUROPEAN SEARCH REPORT | Application Number EP 07 11 8555 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIIHONEN M ET AL: "Broadly tunable picosecond narrowband pulses in a periodically-poled KTiOPO4 parametric amplifier" OPTICS EXPRESS OPT. SOC. AMERICA USA, vol. 14, no. 19, September 2006 (2006-09), pages 8728-8736, XP002473502 ISSN: 1094-4087 * page 8729, paragraph 1 - page 8732, paragraph 2; figure 1 * * page 8734, paragraph 2 - page 8735, paragraph 3; figure 5 * | 1-3,5, 10-12,14 | INV. G02F1/39 H01S3/108 |
| Y | | 4,13 | |
| A | | 6,7 | |
| X | CERULLO G ET AL: "ULTRAFAST OPTICAL PARAMETRIC AMPLIFIERS" REVIEW OF SCIENTIFIC INSTRUMENTS, AIP, MELVILLE, NY, US, vol. 74, no. 1, PART 1, January 2003 (2003-01), pages 1-18, XP001141957 ISSN: 0034-6748 * pages 7-9, paragraphs III.A,III.C; figures 11,12 * * pages 11-12, paragraph IV.A; figures 16,18 * * page 13, right-hand column, paragraph IV.A * | 1-4, 10-13 | |
| Y | | 1-5, 10-14 | TECHNICAL FIELDS SEARCHED (IPC) G02F H01S |

-/--

The present search report has been drawn up for all claims

| Place of search | Date of completion of the search | Examiner |
|---|---|---|
| Munich | 18 June 2008 | Cossu, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 051 137 A1**

<table>
<tr><td colspan="2">European Patent Office</td><td>EUROPEAN SEARCH REPORT</td><td>Application Number<br>EP 07 11 8555</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | STEPANENKO Y ET AL: "Multipass non-collinear optical parametric amplifier for femtosecond pulses" OPTICS EXPRESS OPT. SOC. AMERICA USA, vol. 14, no. 2, January 2006 (2006-01), XP002473503 ISSN: 1094-4087 * pages 781-782; figure 1 * * page 785; figure 4(c) * ----- | 1-5, 10-14 | |
| X | GRAGSON D E ET AL: "Tunable picosecond infrared laser system based on parametric amplification in KTP with a Ti:sapphire amplifier" OPTICS LETTERS USA, vol. 20, no. 19, 1 October 1995 (1995-10-01), pages 1991-1993, XP002473504 ISSN: 0146-9592 * the whole document * | 1,10 | |
| Y | | 2-5, 11-14 | TECHNICAL FIELDS SEARCHED (IPC) |
| A | LIU H J ET AL: "Phase matching analysis of noncollinear optical parametric process in nonlinear anisotropic crystals" OPTICS COMMUNICATIONS ELSEVIER NETHERLANDS, vol. 197, no. 4-6, 1 October 2001 (2001-10-01), pages 507-514, XP002473505 ISSN: 0030-4018 * the whole document * ----- -/-- | 1,2,10, 11 | |

The present search report has been drawn up for all claims

| Place of search | Date of completion of the search | Examiner |
|---|---|---|
| Munich | 18 June 2008 | Cossu, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 11 8555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEPANENKO YURIY ET AL: "High-gain multipass noncollinear optical parametric chirped pulse amplifier" APPLIED PHYSICS LETTERS, AIP, AMERICAN INSTITUTE OF PHYSICS, MELVILLE, NY, vol. 86, no. 21, 20 May 2005 (2005-05-20), pages 211120-1-211120-3, XP012065617 ISSN: 0003-6951 * pages 211120-1 - pages 211120-2, left-hand column; figure 1 * | 8,9,15, 16 | |
| A | SMITH ARLEE V ET AL: "Nanosecond optical parametric oscillator with 90 DEG image rotation: Design and performance" JOURNAL OF THE OPTICAL SOCIETY OF AMERICA - B, OPTICAL SOCIETY OF AMERICA, WASHINGTON, US, vol. 19, no. 8, 1 August 2002 (2002-08-01), pages 1801-1814, XP002433946 ISSN: 0740-3224 * page 1801 - page 1805; figure 6 * | 8,9,15, 16 | TECHNICAL FIELDS SEARCHED (IPC) |

The present search report has been drawn up for all claims

| Place of search | Date of completion of the search | Examiner |
|---|---|---|
| Munich | 18 June 2008 | Cossu, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 051 137 A1**

European Patent
Office

Application Number

EP 07 11 8555

---

**CLAIMS INCURRING FEES**

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**European Patent Office**

**LACK OF UNITY OF INVENTION SHEET B**

Application Number

EP 07 11 8555

The Search Division considers that the present European patent application does not comply with the requirements of unity of invention and relates to several inventions or groups of inventions, namely:

1. claims: 1-7,10-14

    A laser system and a method for generating and amplifying optical pulses with a tunable wavelength between 0.75 and 2.5 um, the laser system comprising an optical parametric amplifier based on a biaxial nonlinear crystal, a first source for seeding the amplifier with pulses having a wavelength between 0.75 and 2.5 um and a second source for pumping the amplifier with pulses having a wavelength between 0.65 and 1 um.

    ---

2. claims: 8,9,15,16

    A laser system and a method for generating and amplifying optical pulses with a tunable wavelength, the laser system comprising an optical parametric amplifier based on a nonlinear crystal, a first source for seeding the amplifier, a second source for pumping the amplifier, a first mirror and a second mirror, wherein the first mirror is positioned in the first focal point of an elliptical trajectory, the nonlinear crystal is positioned in the second focal point and the second mirror is movable along the trajectory, the first mirror directing pulses to the second mirror, the second mirror directing these pulses to the nonlinear crystal.

    ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006072183 A

### Non-patent literature cited in the description

- **E. RIEDLE ; M. BEUTTER ; S. LOCHBRUNNER ; J. PIEL ; S. SCHENKL ; S. SPORLEIN ; W. ZINTH.** Generation of 10 to 50 fs pulses tunable through all of the visible and the NIR. *Appl. Phys. B-Lasers Opt.,* 2000, vol. 71 (3), 457-465
- **W.Q. ZHANG.** Optimum operation of femtosecond parametric oscillation of a noncollinear phase match in KTP. *Appl.Opt.,* 2005, vol. 44, 2431-2437
- **T. WILHELM ; J. PIEL ; E. RIEDLE.** Sub-20-fs pulses tunable across the visible from a blue-pumped single-pass noncollinear parametric converter. *Opt. Lett.,* 1997, vol. 22 (19), 1494-1496
- **G. M. GALE ; M. CAVALLARI ; T. J. DRISCOLL ; F. HACHE.** Sub-20-fs tunable pulses in the visible from an 82-mhz optical parametric oscillator. *Opt. Lett.,* 1995, vol. 20 (14), 1562-1564
- **D. KRAEMER ; R. HUA ; M. L. COWAN ; K. FRANJIC ; R. J. D. MILLER.** Ultrafast noncollinear optical parametric chirped pulse amplification in KTiOAsO4. *Opt. Lett.,* 2006, vol. 31, 981-983
- **D. KRAEMER ; M. L. COWAN ; R. HUA ; K. FRANJIC ; R. J. DWAYNE MILLER.** High-power femtosecond infrared laser source based on noncollinear optical parametric chirped pulse amplification. *J. Opt. Soc. Am. B,* 2007, vol. 24, 813-818